(19) **Europäisches Patentamt / European Patent Office / Office européen des brevets**

(11) **EP 3 233 252 B1**

(12) **FASCICULE DE BREVET EUROPEEN**

(45) Date de publication et mention
de la délivrance du brevet:
**23.08.2023  Bulletin 2023/34**

(21) Numéro de dépôt: **15823695.0**

(22) Date de dépôt: **18.12.2015**

(51) Classification Internationale des Brevets (IPC):
**B01D 63/06** $^{(2006.01)}$    **B01D 46/24** $^{(2006.01)}$
**B01D 67/00** $^{(2006.01)}$    **B01D 71/02** $^{(2006.01)}$
**C04B 38/00** $^{(2006.01)}$

(52) Classification Coopérative des Brevets (CPC):
(C-Sets disponibles)
**B01D 63/066; B01D 46/2418; B01D 46/24491;
B01D 46/24492; B01D 67/0041; B01D 67/0046;
B01D 67/0083; B01D 71/02; C04B 35/565;
C04B 35/584; C04B 35/597; C04B 35/62222;
C04B 38/0006;** C04B 2235/3826; C04B 2235/3873;

(Cont.)

(86) Numéro de dépôt international:
**PCT/FR2015/053663**

(87) Numéro de publication internationale:
**WO 2016/097661 (23.06.2016 Gazette 2016/25)**

(54) **FILTRES COMPRENANT DES MEMBRANES EN SIC INCORPORANT DE L'AZOTE**

FILTER MIT SIC-MEMBRANEN MIT STICKSTOFF

FILTERS COMPRISING SIC MEMBRANES INCORPORATING NITROGEN

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité:  **18.12.2014   FR 1462768**

(43) Date de publication de la demande:
**25.10.2017   Bulletin 2017/43**

(73) Titulaire: **SAINT-GOBAIN CENTRE DE
RECHERCHES
ET D'ETUDES EUROPEEN
92400 Courbevoie (FR)**

(72) Inventeurs:
• **RODRIGUES, Fabiano
84220 Roussillon (FR)**
• **SANT, Jérôme
30133 Les Angles (FR)**
• **ROSSIQUET,Gilles
16100 Louzac Saint-Andre (FR)**

(74) Mandataire: **Saint-Gobain Recherche
Département Propriété Industrielle
39 Quai Lucien Lefranc
93300 Aubervilliers (FR)**

(56) Documents cités:
**EP-A1- 0 219 383      EP-A1- 2 484 433
EP-A1- 2 511 250      WO-A1-2008/114895
WO-A1-2010/028330   CN-A- 104 174 298**

Remarques:
Le dossier contient des informations techniques
présentées postérieurement au dépôt de la demande
et ne figurant pas dans le présent fascicule.

**(Cont. page suivante)**

(52) Classification Coopérative des Brevets (CPC):
(Cont.)
C04B 2235/48; C04B 2235/656; C04B 2235/6581;
C04B 2235/6584

C-Sets
**C04B 38/0006, C04B 35/565, C04B 35/584,
C04B 35/597, C04B 38/0074, C04B 38/0096**

(52) Classification Coopérative des Brevets (CPC):
(Cont.)
C04B 2235/48; C04B 2235/656; C04B 2235/6581;

**Description**

L'invention se rapporte au domaine des structures filtrantes en un matériau inorganique, destinées à la filtration des liquides, en particulier les structures revêtues d'une membrane afin de séparer des particules ou des molécules d'un liquide, plus particulièrement de l'eau.

On connaît depuis longtemps des filtres utilisant des membranes céramiques ou non céramiques pour réaliser la filtration de fluides variés, notamment d'eaux polluées. Ces filtres peuvent fonctionner selon le principe de la filtration frontale, cette technique impliquant le passage du fluide à traiter à travers un média filtrant, perpendiculairement à sa surface. Cette technique est limitée par l'accumulation de particules et la formation d'un gâteau à la surface du média filtrant. Cette technique est donc plus particulièrement adaptée à la filtration de liquides peu chargés en polluants (c'est-à-dire les particules liquides ou solides en suspension).

Selon une autre technique à laquelle se rapporte également la présente invention, on utilise la filtration tangentielle, qui, au contraire, permet de limiter l'accumulation de particules, grâce à la circulation longitudinale du fluide à la surface de la membrane. Les particules restent dans le flux de circulation alors que le liquide peut traverser la membrane sous l'effet de la pression. Cette technique assure une stabilité des performances et du niveau de filtration.

Les points forts de la filtration tangentielle sont donc sa facilité de mise en oeuvre, sa fiabilité grâce à l'utilisation des membranes organiques et/ou inorganiques dont la porosité est adaptée pour effectuer ladite filtration, et son fonctionnement en continu. La filtration tangentielle fait appel à peu ou pas d'adjuvant et fournit deux fluides séparés qui peuvent être tous deux valorisables : le concentrât (également appelé retentât) et le filtrat (également appelé perméat); elle est considérée comme un procédé propre qui respecte l'environnement. Les techniques de filtration tangentielle sont notamment utilisées pour la microfiltration ou l'ultrafiltration. La configuration tangentielle requiert le plus souvent l'utilisation d'au moins deux pompes, l'une de pressurisation (ou gavage) et l'autre de recirculation. La pompe de recirculation présente souvent l'inconvénient d'une consommation énergétique conséquente. La mise en oeuvre de dispositifs filtrants garantissant de forts débits du filtrat permettrait de limiter la consommation d'énergie.

La présente invention est donc adaptée tout aussi bien aux filtres tangentiels qu'aux filtres à filtration frontale.

On connaît ainsi de la technique actuelle de nombreuses structures de filtres fonctionnant suivant les principes de la filtration tangentielle ou de la filtration frontale. Elles comprennent ou sont constituées à partir de supports tubulaires ou parallélépipédiques en un matériau inorganique poreux formés de parois délimitant des canaux longitudinaux parallèles à l'axe desdits supports.

Dans le cas de filtres tangentiels le filtrat passe au travers des parois puis est évacué au niveau de la surface extérieure périphérique du support poreux. Ces filtres sont plus particulièrement adaptés pour filtrer des liquides fortement chargés en particules.

Dans le cas des filtres frontaux les canaux longitudinaux sont normalement bouchés à une extrémité, par exemple alternativement, de manière à former des canaux d'entrée et des canaux de sortie séparés par les parois des canaux, les canaux d'entrée et/ou de sortie étant revêtus de la membrane filtrante au travers duquel tout le liquide passe, les particules étant retenues par la membrane.

La surface desdits canaux est le plus souvent habituellement recouverte d'une membrane, de préférence en un matériau inorganique poreux, appelée membrane, couche membranaire ou couche séparatrice membranaire dans la présente description, dont la nature et la morphologie sont adaptées pour arrêter les molécules ou les particules dont la taille est proche ou supérieure au diamètre médian des pores de ladite membrane, lorsque le filtrat se répand dans la porosité du support poreux sous la pression du fluide traversant le filtre. La membrane est classiquement déposée sur la surface interne des canaux par un procédé d'enduction d'une barbotine du matériau inorganique poreux suivie d'un traitement thermique de consolidation, notamment un séchage et le plus souvent d'un frittage des membranes céramiques.

De nombreuses publications indiquent différentes configuration des canaux traversants qui visent à obtenir un filtre présentant les propriétés optimales pour l'application et en particulier :

- une perte de charge faible,
- un flux de perméat sortant le plus élevé et le plus homogène possible d'un canal à un autre dans le plan de section du filtre,
- une forte résistance mécanique et en particulier une résistance à l'abrasion élevée tel que mesuré par un test de résistance à la rayure,
- une forte sélectivité vis-à-vis des espèces polluantes à filtrer,
- idéalement une résistance chimique élevée notamment à l'acidité.

Les travaux menés par la société déposante ont montré, selon une autre approche complémentaire, qu'au sein de telles structures filtrantes, il était utile d'agir sur la composition chimique de la membrane séparatrice, pour améliorer encore les performances de filtration de la structure, voire la durée de vie du filtre. Un tel but est notamment atteint par l'amélioration de la résistance à l'abrasion de la membrane du filtre selon l'invention, qui peut de ce fait fonctionner efficacement sur une durée de vie sensiblement plus importante.

De nombreux documents de l'art décrivent différentes compositions possibles pour la membrane céramique en matériau inorganique poreux, sans toutefois établir de relation causale entre la composition du matériau constituant la membrane et les performances du filtre. Selon une réalisation, la demande FR 2549736 propose d'augmenter le flux de liquide filtré en spécifiant la taille des particules formant la couche filtrante par rapport à celles formant le support. Les couches en alumine divulguées présentent cependant un flux considéré comme faible au regard de la présente invention.

D'autres publications, par exemple la demande de brevet EP0219383A1, mentionnent l'utilisation de carbure et de nitrure de silicium comme matériau constitutif de la membrane. Selon l'exemple 2 de cette publication, un corps filtrant dont la couche membranaire formée de particules de SiC est directement calcinée sous azote à une température de 1050°C. La résistance à l'abrasion de la membrane ainsi obtenue est apparue cependant trop faible pour permettre l'obtention de filtres ayant une durée de vie prolongée.

La demande de brevet WO03/024892 décrit une méthode de préparation d'un support ou d'une membrane réalisés à partir d'un mélange de particules grosses de SiC alpha, d'une poudre de silicium métallique et d'un précurseur de carbone destinés à former entre les gros grains une phase liante de fines particules de SiC béta. La phase liante est finalement convertie selon cet enseignement en alpha SiC ultérieurement par cuisson à très haute température (typiquement 1900 à 2300°C).

Le brevet US 7699903 B2 décrit des couches séparatrices membranaires en carbure de silicium à partir d'un mélange de deux poudres de particules de SiC alpha frittées ensemble à une température comprise entre 1750 et 1950°C.

Le document EP2511250 décrit un support poreux comprenant des grains de SiC dont la surface est recouverte par une couche contenant de l'azote. Cette couche d'azote est obtenue par un traitement de nitruration permettant de contrôler la résistivité pour la dépollution de gaz de combustion. Selon cette publication, on cherche à obtenir ainsi un filtre ou plus exactement un élément support en SiC dopé à l'azote dont la conductivité en fonction de la température est contrôlée. Il est clairement indiqué dans ce document que ladite nitruration est pratiquée sur les grains de SiC constituant le support poreux. Le document ne décrit donc le dépôt d'une couche supplémentaire (i.e. une couche séparatrice membranaire) sur la surface interne des canaux ou la surface externe de l'élément filtrant avant nitruration.

La demande de brevet EP2484433 décrit un filtre à particule pour la purification des gaz d'échappement dont les parois poreuses peuvent comprendre du SiC et d'autres particules que le SiC, ces particules pouvant être choisies parmi un oxyde, un oxynitrure ou un nitrure d'un élément des groupes 3 à 14 de la classification.

L'objet de la présente invention est de fournir un filtre incorporant une membrane filtrante résistante quelles que soient ses conditions d'utilisation et dont la longévité s'en trouve ainsi améliorée, pour des performances de filtration identique ou sensiblement améliorée vis-à-vis de réalisations antérieures.

En particulier il a été mis en évidence par les travaux de la société déposante, décrits ci-après, un optimum en termes de résistance à l'abrasion et de performance de filtration, tout en conservant une très bonne sélectivité, par une sélection appropriée du matériau constitutif desdites membranes, ledit matériau pouvant être obtenu par le procédé de selon l'invention.

Tout particulièrement, il a été mis en évidence par les travaux de la société déposante, décrits ci-après, un avantage non encore décrit dans l'art à fritter à haute température les filtres membranes sous une atmosphère azotée. Ce traitement a permis selon la présente invention d'obtenir des membranes très résistantes à l'abrasion sans accroissement de la taille des pores et donc sans réduction de la sélectivité du filtre, comme il est habituellement observé sur les membranes non oxydes, en particulier en carbure de silicium (SiC) obtenues par frittage à haute température.

Des structures céramiques frittées à haute température à base de SiC comportant de l'azote par une recuisson sous $N_2$ sont connues. Ce dopage à l'azote vise, dans les publications connues à ce jour, à augmenter la conductivité électronique de produits denses en carbure de silicium. Par exemple, le document US 3,875,477 décrit l'utilisation de telles céramiques dans le domaine des allumeurs céramiques. Aucun document connu à ce jour ne dévoile ni ne suggère la mise en œuvre d'un tel matériau comme constituant d'une membrane poreuse dans un filtre frontale ou tangentielle afin d'en augmenter les performances, en particulier la sélectivité et la stabilité mécanique notamment lors de la filtration de fluides tels que des eaux comportant une charge ionique.

Dans la présente description on utilise indifféremment les termes membranes séparatrices, couche séparatrice ou couche séparatrice membranaire pour désigner de telles membranes permettant la filtration.

L'invention se rapporte ainsi selon un premier aspect à un structure filtrante ou filtre selon les revendications qui suivent, configuré pour la filtration d'un liquide, comprenant ou constitué par un élément support fait dans un matériau céramique poreux, ledit élément présentant une forme tubulaire ou parallélépipédique délimitée par une surface externe et comprenant dans sa portion interne un ensemble de canaux adjacents, d'axes parallèles entre eux et séparés les uns des autres par des parois dudit matériau inorganique poreux, dans lequel au moins une partie desdits canaux et/ou au moins une partie de ladite surface externe sont recouverts d'une couche séparatrice membranaire poreuse. Lors du fonctionnement du filtre, cette couche, comme indiqué précédemment, entre en contact avec ledit fluide à filtrer circulant dans lesdits canaux pour en permettre la filtration tangentielle ou frontale.

D'autres caractéristiques essentielles d'un filtre selon la présente invention sont décrites dans la revendication 1 parmi lesquelles :

- ladite couche est faite dans un matériau constitué essentiellement de carbure de silicium (SiC),
- la teneur massique en azote élémentaire de la couche constituant la couche séparatrice membranaire poreuse est comprise entre 0,1% et 2%,
- La porosité de la couche séparatrice membranaire est comprise entre 10 et 70%, et le diamètre médian de pores est compris entre 10 nanomètres et 5 micromètres.
- De l'azote élémentaire est présent aux joints de grains et dans les grains de SiC constituant la couche séparatrice membranaire
- La taille médiane des grains de SiC dans ledit matériau est comprise entre 20 nanomètres et 10 micromètres.

Selon d'autres caractéristiques additionnelles optionnelles et avantageuses de la couche séparatrice membranaire :

- Le SiC représente plus de 95%, de préférence plus de 97% de la masse du matériau constituant la couche séparatrice membranaire.
- La teneur massique en azote élémentaire de la couche constituant la couche séparatrice membranaire poreuse est comprise entre 0,1% et 1,5 %, plus préférentiellement entre 0,1 et 0,5%.
- La porosité de la couche séparatrice membranaire est comprise entre 30 et 60% et le diamètre médian de pores est compris entre 100 et 1500 nanomètres, en particulier entre 200 et 1000 nanomètres.
- La taille médiane des grains de SiC dans ledit matériau est comprise entre 0,1 et 1 micromètre, tel que cela peut classiquement être mesuré par analyse de clichés obtenus par microscopie électronique à balayage (MEB).
- La teneur massique en oxygène élémentaire du matériau constituant la couche séparatrice membranaire est inférieure ou égale à 1% et de préférence est inférieure à 0,5%.
- Le ratio $100 \times$ ([d90-d10]/d50) de diamètres de pores est inférieur à 10, de préférence inférieur à 5, les percentiles D10, D50 et D90 d'une population de pores étant les diamètres de pores correspondant respectivement aux pourcentages de 10%, 50%, 90% sur la courbe de distribution cumulée de distribution de tailles de pores classées par ordre croissant et mesurées par microscopie optique.
- Le SiC constituant les grains est essentiellement sous forme cristallographique alpha.

Dans le matériau constituant la couche membranaire céramique selon l'invention, l'azote est présent dans les grains par insertion dans le réseau cristallin du SiC mais aussi partiellement à la surface des grains et aux joints de grain, certainement du fait de la porosité de la couche membranaire et de la faible taille des grains composant la couche séparatrice membranaire. Sans qu'aucune théorie ne soit associée à cet effet, il est possible que l'azote localisé à la surface et aux joints de grains participe à la modification locale de la surface de telle manière que le flux de liquide est facilité.

En ce qui concerne le support poreux, on donne les indications suivantes concernant des modes de réalisation préférés mais non limitatifs de la présente invention :

- La porosité du matériau constituant le support poreux est comprise entre 20 et 70%, préférentiellement entre 30 et 60%.
- Le diamètre médian de pores du matériau constituant le support poreux est compris entre 5 et 50 micromètres, de manière plus préférée entre 10 et 40 micromètres.
- Le support poreux comprend et de préférence est constitué en un matériau céramique, de préférence un matériau céramique non oxyde, de préférence choisi parmi le carbure de Silicium SiC, en particulier le SiC fritté en phase liquide ou en phase solide, le SiC recristallisé, le nitrure de Silicium, en particulier $Si_3N_4$, l'oxynitrure de Silicium, en particulier $Si_2ON_2$, l'oxynitrure de Silicium et d'Aluminium, ou une combinaison de ceux-ci. De préférence le support est constitué de carbure de Silicium, de manière encore plus préférée de SiC recristallisé.

- La base de la forme tubulaire ou parallélépipédique est polygonale, de préférence carrée ou hexagonale, ou circulaire. La forme tubulaire ou parallélépipédique présente un axe central longitudinal de symétrie (A).
- Notamment dans le cas d'un filtre à filtration frontale, les canaux sont bouchés à une extrémité, de préférence alternativement, afin de définir des canaux d'entrée et des canaux de sortie de façon à forcer le liquide entrant par les canaux d'entrée à la surface desquels est déposée la membrane au travers de laquelle le liquide passe avant d'être évacué par les canaux de sortie.
- Si le filtre est tangentiel, l'extrémité du support tubulaire peut être en contact avec une plaque étanche au liquide à filtrer et perforée à l'endroit des canaux qui lui font face de manière à former un support filtrant placé dans une tubulure ou un système de filtration. Une autre possibilité peut consister à introduire le filtre tangentiel dans la tubulure un joint périphérique étanche à chaque extrémité et autour du filtre de manière à assurer le flux de perméat indépendamment du flux de concentrât.

- Les éléments sont de section hexagonale, la distance entre deux côtés opposés de la section hexagonale étant comprise entre 20 et 80 mm.
- Les conduits des éléments filtrants sont ouverts sur leurs deux extrémités.
- Les conduits des éléments filtrants sont alternativement bouchés sur la face d'introduction du liquide à filtrer et sur la face opposée.
- Les conduits des éléments filtrants sont ouvert sur la face d'introduction du liquide et fermés sur la face de récupération.
- Une majorité des conduits, notamment plus de 50%, voire plus de 80%, sont de section carrée, ronde ou oblongue, de préférence ronde, et de préférence encore ont un diamètre hydraulique compris entre 0,5mm et 10mm, de préférence entre 1mm et 5mm. Le diamètre hydraulique Dh d'un canal est calculé, dans un plan de section transversal P quelconque de la structure tubulaire, à partir de la surface de la section du canal S dudit canal et de son périmètre P, selon ledit plan de section et par application de l'expression classique suivante :

$$Dh = 4 \times S / P$$

Comme indiqué précédemment, le filtre selon l'invention peut comprendre, outre la couche séparatrice membranaire, une ou plusieurs couches primaires, disposées entre le matériau constituant l'élément support et le matériau constituant la couche séparatrice membranaire. Le rôle de cette (ces) couche(s) dite(s) primaire(s) consiste à faciliter l'accrochage de la couche séparatrice et/ou à éviter que les particules de la membrane séparatrice passent à travers le support, notamment lors d'un dépôt par enduction.

Le filtre peut comprendre en outre une ou plusieurs couches primaires disposées entre le matériau constituant l'élément support et le matériau constituant la couche séparatrice membranaire.

Dans la présente description, sauf autrement spécifié, tous les pourcentages sont massiques.

L'invention se rapporte également à une couche séparatrice membranaire telle que précédemment décrite, faite dans un matériau constitué essentiellement du carbure de silicium (SiC), ledit carbure de silicium contient en outre de l'azote, la teneur massique en azote élémentaire dans ladite couche étant comprise entre 0,1% et 2%.

Sans qu'il soit besoin de les reporter de nouveau ici, il est bien évident que l'invention porte également sur les couches séparatrice membranaire répondant à toutes les caractéristiques préférés décrites précédemment, en relation avec la structure filtrante dans laquelle ladite couche est incorporée.

Enfin, l'invention se rapporte à un procédé de fabrication d'une couche séparatrice membranaire tel que précédemment décrite, dans un filtre tangentiel ou frontal, de préférence tangentiel, comprenant les étapes suivantes :

- préparation d'une barbotine à partir d'une poudre de particules de carbure de silicium de taille moyenne comprise entre 20 nanomètres et 10 micromètres,
- application de ladite barbotine sur l'élément support, dans des conditions permettant la formation d'une couche mince de la barbotine sur la partie interne des canaux dudit filtre,
- séchage puis cuisson sous une atmosphère contenant de azote à une température comprise entre 1400°C et 2000°C et pendant un temps suffisant pour l'obtention d'une couche séparatrice membranaire sur leur surface interne desdits canaux, ladite couche étant constituée essentiellement carbure de silicium contenant de l'azote, la teneur massique en azote élémentaire dans ladite couche étant comprise entre 0,1% et 2%.

On donne en outre les indications suivantes :
La porosité ouverte et le diamètre médian de pores du support poreux décrits dans la présente description sont déterminés de manière connue par porosimétrie au mercure.

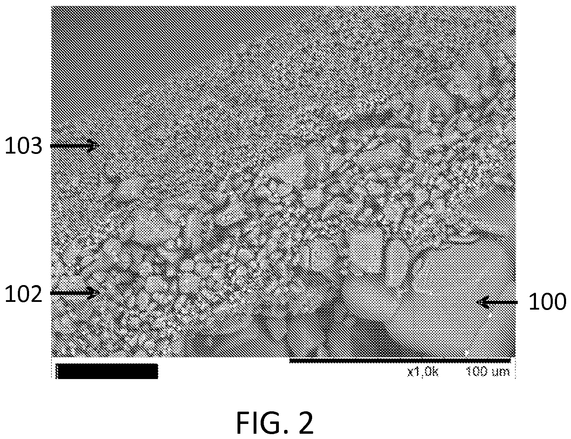

La porosité et le diamètre médian de pores de la couche séparatrice membranaire sont avantageusement déterminés selon l'invention à l'aide d'un microscope électronique à balayage. Par exemple, on réalise des sections d'une paroi du support en coupe transversale, comme illustré par la figure 2 ci-jointe, de manière à visualiser toute l'épaisseur du revêtement sur une longueur cumulée d'au moins 1,5 cm. L'acquisition des images est effectuée sur un échantillon d'au moins 50 grains. L'aire et le diamètre équivalent de chacun des pores sont obtenus à partir des clichés par des techniques classiques d'analyse d'images, éventuellement après une binarisation de l'image visant à en augmenter le contraste. On déduit ainsi une distribution de diamètres équivalents, dont on extrait le diamètre médian de pores. De même on peut déterminer par cette méthode une taille médiane des particules constituant la couche membranaire.

Un exemple de détermination du diamètre médian de pores ou de la taille médiane des particules constituant la couche membranaire, à titre d'illustration, comprend la succession des étapes suivantes, classique dans le domaine :

- Une série de clichés en MEB est prise du support avec sa couche membranaire observé selon une coupe transversale (c'est-à-dire dans toute l'épaisseur d'une paroi). Pour plus de netteté, les clichés sont effectués sur une section polie du matériau. L'acquisition de l'image est effectuée sur une longueur cumulée de la couche membranaire au moins égal à 1,5 cm, afin d'obtenir des valeurs représentatives de l'ensemble de l'échantillon.
- Les clichés sont de préférence soumis à des techniques de binarisation, bien connues dans les techniques de traitement de l'image, pour augmenter le contraste du contour des particules ou des pores.
- Pour chaque particule ou chaque pore constituant la couche membranaire, une mesure de son aire est réalisée. Un diamètre équivalent de pores ou de grain est déterminé(e), correspondant au diamètre d'un disque parfait de même aire que celui mesuré pour ladite particule ou pour ledit pore (cette opération pouvant éventuellement être réalisée à l'aide d'un logiciel dédié notamment Visilog® commercialisé par Noesis).
- une distribution de taille de particules ou de grains ou de diamètre de pores est ainsi obtenue selon une courbe classique de répartition et une taille médiane des particules et/ou un diamètre médian de pores constituant la couche membranaire sont ainsi déterminés, cette taille médiane ou ce diamètre médian correspondant respectivement au diamètre équivalent divisant ladite distribution en une première population ne comportant que des particules ou de pores de diamètre équivalent supérieur ou égal à cette taille médiane et une deuxième population comportant que des particules de diamètre équivalent inférieur à cette taille médiane ou ce diamètre médian .

Au sens de la présente description et sauf mention contraire, la taille médiane des particules ou le diamètre médian des pores mesurée par microscopie désigne respectivement le diamètre des particules ou de pores au-dessous duquel se trouve 50% en nombre de la population. En revanche s'agissant du diamètre de pores mesuré sur le substrat par porosimétrie mercure, le diamètre médian correspond à un seuil de 50% de la population en volume.

On appelle « frittage », de façon classique dans le domaine des céramiques (c'est-à-dire au sens indiqué dans la norme internationale ISO 836:2001, point 120), une consolidation par traitement thermique d'un aggloméré granulaire. Le traitement thermique des particules utilisées comme charge de départ pour l'obtention des couches membranaires selon l'invention permet ainsi la jonction et le développement de leurs interfaces de contact par mouvement des atomes à l'intérieur et entre lesdites particules.

Le frittage entre les grains de SiC et les grains de silicium métallique selon l'invention est normalement essentiellement effectué en phase liquide, la température de frittage étant proche voire supérieure à la température de fusion du silicium métallique.

Le frittage peut être effectué en présence d'un additif de frittage, tel qu'un carbure de bore, de l'alumine, yttrine généralement en une teneur inférieure à 1% massique. Par additif de frittage, on entend un composé connu habituellement pour permettre et/ou accélérer la cinétique de la réaction de frittage. Le diamètre médian $D_{50}$ des poudres de particules utilisées pour réaliser le support ou la couche séparatrice membranaire est donné classiquement par une caractérisation de distribution granulométrique, par exemple au moyen d'un granulomètre laser.

Les teneurs massiques en azote et en oxygène élémentaires de la couche séparatrice membranaire peuvent être déterminées après fusion sous gaz inerte, par exemple au moyen d'un analyseur commercialisé sous la référence TC-436 par la société LECO Corporation.

La teneur en SiC peut aussi être mesurée selon un protocole défini selon la norme ANSI B74.15-1992-(R2007) par différence entre carbone total et carbone libre, cette différence correspondant au carbone fixé sous forme de carbure de silicium.

On donne ci-après un exemple non limitatif permettant la réalisation d'un filtre selon l'invention, bien évidemment non limitatif également des procédés permettant d'obtenir un tel filtre et du procédé selon la présente invention:
Selon une première étape, le support filtrant est obtenu par extrusion d'une pâte au travers d'une filière configurée selon la géométrie de la structure à réaliser selon l'invention. L'extrusion est suivie d'un séchage et d'une cuisson afin de fritter le matériau inorganique constituant le support et obtenir les caractéristiques de porosité et de résistance mécanique nécessaire à l'application.

Par exemple, lorsqu'il s'agit d'un support en SiC, il peut être en particulier obtenu selon les étapes de fabrication suivantes :

- malaxage d'un mélange comportant des particules de carbure de silicium de pureté supérieure à 98% et présentant une granulométrie telle que 75% en masse des particules présente un diamètre supérieur à 30 micromètres, le diamètre médian en masse de cette fraction granulométrique (mesuré par granulomètre laser) étant inférieur à 300 micromètres. Le mélange comporte aussi un liant organique du type dérivé de cellulose. On ajoute de l'eau et on malaxe jusqu'à obtenir une pâte homogène dont la plasticité permet l'extrusion, la filière étant configurée pour l'obtention des monolithes selon l'invention.

- séchage des monolithes crus par micro-onde pendant un temps suffisant pour amener la teneur en eau non liée chimiquement à moins de 1% en masse.
- cuisson jusqu'à une température d'au moins 1300°C dans le cas de support filtrant à base de SiC fritté en phase liquide, de nitrure de Silicium, d'oxynitrure de Silicium, d'oxynitrure de Silicium et d'Aluminium ou même de BN et d'au moins 1900°C et inférieure à 2400°C dans le cas d'un support filtrant à base de SiC recristallisé ou fritté en phase solide. Dans le cas d'un support filtrant en nitrure ou oxynitrure l'atmosphère de cuisson est de préférence azotée. Dans le cas d'un support filtrant en SiC recristallisé l'atmosphère de cuisson est de préférence neutre et plus particulièrement d'argon. La température est maintenue typiquement pendant au moins 1 heure et de préférence pendant au moins 3 heures. Le matériau obtenu présente une porosité ouverte de 20 à 60% en volume et un diamètre médian de pores de l'ordre de 5 à 50 micromètres.

Le support filtrant est ensuite revêtu selon l'invention d'une membrane (ou couche séparatrice membranaire). Une ou plusieurs couches peuvent être déposées afin de former une membrane selon diverses techniques connues de l'homme du métier : techniques de dépôt à partir de suspensions ou de barbotines, techniques de dépôt chimique en phase vapeur (CVD) ou de projection thermique, par exemple projection plasma (plasma spraying).

De préférence les couches de membrane sont déposées par enduction à partir de barbotines ou de suspensions. Une première couche (appelée couche primaire) est préférentiellement déposée en contact avec le matériau poreux constituant le substrat, jouant le rôle de couche d'accrochage. Un exemple non limitatif d'une formulation minérale de primaire comporte 30% à 50% en masse de poudre (s) de SiC de diamètre médian de 2 à 20 microns, le reste étant de l'eau déminéralisée, (hormis les éventuels additifs organiques).

Typiquement une formulation de primaire comprend en masse 25 à 35% d'une poudre de SiC de diamètre médian 7 à 20 microns, 15 à 25% d'une poudre de SiC de diamètre médian 2 à 6 microns, le complément à 100% étant apporté par l'eau déminéralisée (hormis les additifs ou ajouts organiques).

Bien que préférentiellement présente, dans certaines configurations de filtre, cette couche primaire peut être absente sans sortir du cadre de l'invention.

Une seconde couche de porosité plus fine est ensuite déposée sur la couche de primaire (ou directement sur le support), qui constitue la membrane ou couche séparatrice membranaire proprement dite. La porosité de cette dernière couche est adaptée pour conférer à l'élément filtrant ses propriétés finales de filtration, en particulier sa sélectivité par une valeur ajustée de son diamètre médian de pores. Un exemple non limitatif d'une formulation minérale de couche séparatrice comporte 30% à 50% en masse de poudre (s) de SiC de diamètre médian de 0,1 à 1 microns le reste étant de l'eau déminéralisée, (hormis les éventuels additifs organiques).

Afin de contrôler la rhéologie des barbotines et respecter une viscosité adéquate (typiquement comprise entre 0,01 à 1,5 Pa.s de préférence 0,1 à 0,8 Pa.s sous un gradient de cisaillement de 1s$^{-1}$ mesurée à 22°C selon la norme DINC33-53019), des agents épaississants (selon des proportions typiquement entre 0,02 et 2% de la masse d'eau). Des agents liants (typiquement entre 0,5 et 20% de la masse de poudre de SiC), des agents dispersants (entre 0,01 et 1% de la masse de poudre de SiC) peuvent aussi être ajoutés. Les agents épaississants sont de préférence des dérivés cellulosiques, les agents liants de préférence des PVA ou des dérivés d'acrylique et les agents dispersants sont de préférence du type polymétacrylate d'ammonium.

Des ajouts organiques exprimés en poids de la barbotine, notamment du Dolapix A88 comme agent défloculant par exemple selon une proportion de 0,01 à 0,5% ; de la Tylose par exemple de type MH4000P comme épaississant selon une proportion de 0,01 à 1%, du PVA comme agent collant à raison de 0,1 à 2% exprimé en masse d'extrait sec; du monoéthylène glycol comme plastifiant et de l'éthanol à 95% volume comme réducteur de tension de surface, sont plus particulièrement appropriés.

Ces opérations d'enduction permettent typiquement d'obtenir une couche de primaire d'épaisseur d'environ 30 à 40 micromètres après séchage. Lors de la deuxième étape d'enduction une couche de membrane d'épaisseur par exemple d'environ 30-40 $\mu$m est obtenue après séchage, cette gamme d'épaisseur n'étant bien entendu en rien limitative.

Les étapes spécifiques d'un procédé selon l'invention pour le dépôt de la couche séparatrice membranaire selon l'invention sur le support, éventuellement au-dessus de la couche de primaire décrite précédemment, sont décrites ci-après :

Selon un premier mode de réalisation privilégié, une barbotine est préparée comme indiqué précédemment à partir d'une poudre ou de préférence plusieurs poudres de particules de carbure de silicium de différentes granulométries et en présence de la quantité d'eau permettant de préférence de respecter les conditions de rhéologie et de viscosité décrites précédemment, ainsi qu'en présence des agents organiques nécessaires de préférence de manière à obtenir une barbotine ayant un PH inférieur ou égal à 10.

La barbotine est ensuite appliquée sur l'élément support, dans des conditions et par des moyens adaptés pour permettre la formation d'une couche mince sur la partie interne des canaux dudit filtre, tels que notamment décrits précédemment.

Après application de cette couche, le support est d'abord séché à température ambiante typiquement pendant au moins 10 minutes puis chauffée à 60°C pendant au moins 12 heures. Finalement, une couche séparatrice membranaire poreuse à la surface des canaux du support est obtenue par frittage dans un four, dans une atmosphère comprenant de l'azote, de préférence sous une atmosphère comprenant très majoritairement ou exclusivement de l'azote gazeux ($N_2$), à la pression atmosphérique (1 bar). La température de cuisson est typiquement d'au moins 1400°C, de préférence d'au moins 1500°C et est préférentiellement inférieure à 2000°C, de préférence encore inférieure à 1900°C, pendant un temps suffisant, notamment d'au moins une heure, pour obtenir la teneur en azote au sein de la membrane telle que décrite précédemment selon l'invention.

Selon un second mode alternatif, un filtre revêtu d'une barbotine céramique de la couche membranaire est fritté selon une première étape sous argon typiquement entre 1400 et 2000°C, de préférence entre 1400 et 1800°C, puis selon une deuxième étape le filtre avec sa membrane frittée est soumis à un traitement thermique à une température typiquement d'au moins 1000°C, de préférence entre 1100 et 1400°C, de manière plus préférée entre 1100°C et 1200°C, sous atmosphère non oxydante à base d'azote, en particulier sous une atmosphère réductrice contenant un mélange d'azote et d'hydrogène, par exemple en volume 5% d'hydrogène $H_2$ pour 95% d'azote $N_2$, selon une durée de palier de 0,5 à 5h, de préférence 1h à 2h. Par exemple avec une montée en température de 5°C/min jusqu' à 1200°C et un palier de 2h puis une redescente à l'ambiante avec une vitesse de 5°C/min est adéquat.

Selon un troisième mode, on utilise pour la barbotine initiale une ou plusieurs poudres de carbure de silicium précuite sous atmosphère d'azote jusqu'à obtenir une teneur massique en azote élémentaire dans les grains de SiC comprise entre 0,1 et 0,5%. Après application de la barbotine selon les principes décrits précédemment, le filtre final muni de la couche séparatrice membranaire est obtenu par frittage sous argon ou d'un mélange argon/azote entre 1400 et 1800°C, de préférence entre 1400°C et 1650°C.

L'épaisseur de la couche séparatrice membranaire obtenue est de préférence comprise entre 10 et 60 micromètres. Les analyses de microscopie électronique et de fluorescence X montrent que le matériau ainsi obtenu est constitué essentiellement de grains de SiC alpha.

De façon essentielle à l'obtention des propriétés recherchées selon l'invention, les poudres de carbure de silicium initialement choisis dans le procédé de préparation de la couche membranaire séparatrice sont sélectionnées selon les critères suivants :

- la poudre de SiC initiale présente une teneur en Si métallique inférieure à 1,0% en masse, de préférence inférieure à 0,5% en masse, voire même inférieure à 0,2% en masse,
- la poudre de SiC initiale présente une teneur en oxygène élémentaire inférieure à 2,0% en masse, de préférence inférieure à 1,5%, voire même inférieure à 1,0%.

Selon le procédé utilisé selon l'invention pour l'obtention de la couche séparatrice membranaire, la gamme de température des traitements thermiques de frittage décrite précédemment, associée à une formulation de la membrane comportant (par le choix des réactifs initiaux, voir paragraphe précédent) très peu de silicium métallique susceptible de réagir avec l'atmosphère azotée, permet avantageusement de saturer la surface des grains et des joints de grain d'azote sans cependant former de phase(s) nitrure(s) détectable(s), notamment sous forme de fibres ou de particules aciculaires caractéristiques de la présence de $Si_3N_4$. Egalement, lesdits traitements de frittage étant effectués en atmosphère quasiment exempte d'oxygène (concentration massique typiquement de moins de 50 voire moins de 25 ppm d'oxygène), il ne se produit pas de réaction d'oxydation du SiC susceptible de réagir avec l'azote de l'atmosphère de cuisson et de former une phase nitrure ou oxynitrure détectable à la surface des grains ou entre les grains composant la couche séparatrice membranaire.

Si le filtre est configuré pour une application en filtration tangentielle, il peut être fixé sur une plaque perforée à l'endroit des ouvertures de canaux, de manière étanche, afin d'être installé dans une tubulure ou un système de filtration. Le traitement thermique employé pour fixer la plaque perforée au support filtre doit être effectué à une température inférieure à la température de décomposition de la membrane composite.

Si le filtre présente des canaux alternativement bouchés afin d'obtenir un filtre membrane fonctionnant selon les principes de la filtration frontale et si le bouchage est effectué postérieurement au dépôt de la membrane au moins pour une face du filtre, soit du côté des canaux d'entrée soit du côté de sortie, le bouchage peut être réalisé avec une barbotine de SiC, les bouchons étant frittés à une température inférieure à la température de décomposition de la membrane composite, préférentiellement en même temps que la membrane.

Les figures associées aux exemples qui suivent sont fournis afin d'illustrer l'invention et ses avantages, sans bien entendu que les modes de réalisations ainsi décrits puissent être considérés comme limitatifs de la présente invention.

Dans les figures ci-jointes :

- La figure 1 illustre une configuration classique d'un filtre tubulaire selon la technique actuelle, selon un plan de coupe transversal P.

- La figure 2 est un cliché de microscopie d'un filtre montrant la couche de séparation membranaire au sens de la présente invention.

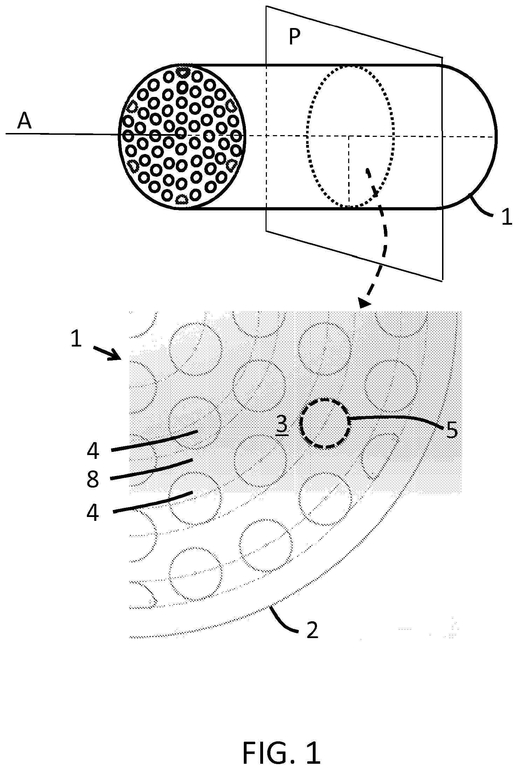

La figure 1 illustre un filtre tangentiel 1 selon la technique actuelle et conforme à la présente invention, tel qu'utilisé pour la filtration d'un fluide tel qu'un liquide. La figure 1 représente une vue schématique du plan de coupe transversal P. Le filtre comprend ou le plus souvent est constitué par un élément support 1 fait dans un matériau inorganique poreux de préférence non oxyde. L'élément présente classiquement une forme tubulaire d'axe central longitudinal A, délimitée par une surface externe 2. Il comprend dans sa portion interne 3 un ensemble de canaux 4 adjacents, d'axes parallèles entre eux et séparés les uns des autres par des parois 8. Les parois sont constituées dans un matériau inorganique poreux laissant passer le filtrat depuis la partie interne 3 vers la surface externe 2. Les canaux 4 sont recouverts sur leur surface interne d'une couche séparatrice membranaire 5 déposée sur un primaire d'accrochage, tel qu'illustré par le cliché de microscopie électronique reporté sur la figure 2. Cette couche séparatrice membranaire 5 (ou membrane) entre en contact avec ledit fluide circulant dans lesdits canaux et en permet la filtration.

Sur la figure 2 on a reporté un cliché de microscopie électronique pratiqué sur un canal 4 de la figure 1. On observe sur cette figure le support poreux 100 de forte porosité, la couche de primaire 102 permettant l'accrochage de la couche séparatrice membranaire 103 de plus fine porosité.

Selon une autre configuration non représentée d'un autre filtre selon l'invention, celui-ci est configuré pour que le fluide à traiter traverse initialement la paroi externe, le perméat étant recueilli cette fois en sortie des canaux. Selon une telle configuration, la couche membranaire filtrante est avantageusement déposée sur la surface externe du filtre et en recouvre au moins une partie.

Une telle configuration est souvent appelé FSM (pour Flat Sheet Membrane). On pourra se référer à la publication disponible sur le site web : http://www.liqtech.com/img/user/file/FSM_Sheet_F_4_260214V2 .pdf.

Les exemples qui suivent sont fournis à titre uniquement illustratifs. Ils ne sont pas limitatifs et permettent de mieux comprendre les avantages techniques liés à la mise en oeuvre de la présente invention :

Les supports selon tous les exemples sont identiques et sont obtenus selon le même protocole expérimental qui suit : On mélange dans un malaxeur :

- 3000 g d'un mélange des deux poudres de particules de carbure de silicium de pureté supérieure à 98% dans les proportions suivantes : 75% en masse d'une première poudre de particules présentant un diamètre médian de l'ordre de 60 micromètres et 25% en masse d'une deuxième poudre de particules présentant un diamètre médian de l'ordre de 2 micromètres. (Au sens de la présente description, le diamètre médian $d_{50}$ désigne le diamètre des particules au-dessous duquel se trouve 50% en masse de la population desdites particules).
- 300 g d'un liant organique du type dérivé de cellulose.

On ajoute de l'eau environ 20% en masse par rapport à la masse totale de SiC et d'additif organique et on malaxe jusqu'à obtenir une pâte homogène dont la plasticité permet l'extrusion d'une structure de forme tubulaire, la filière étant configurée pour l'obtention de blocs monolithes dont les canaux et les parois externes présentent une structure selon la configuration recherchée et telle que représentée sur les figures 1 à 2 ci-jointes.

Plus précisément, les monolithes cuits présentent des canaux ronds de diamètre hydraulique 2mm, les canaux périphériques en demi-lune représentés sur les figures présentant un diamètre hydraulique de 1,25mm. L'épaisseur moyenne de la paroi externe est 1,1 mm et l'OFA (Open Front Area) de la face d'entrée du filtre est de 37%. L'OFA (« open front area » en anglais) ou surface de front ouverte, est obtenue en calculant le rapport en pourcentage de l'aire couverte par la somme des sections transversales des canaux sur l'aire totale de la section transversale correspondante du support poreux.

On synthétise ainsi pour chaque configuration 5 à 10 supports crus de 25 mm de diamètre et 30 cm de longueur.

Les monolithes crus ainsi obtenus sont séchés par micro-onde pendant un temps suffisant pour amener la teneur en eau non liée chimiquement à moins de 1% en masse.

Les monolithes sont ensuite cuits jusqu'à une température d'au moins 2100°C qui est maintenue pendant 5 heures. Le matériau obtenu présente une porosité ouverte de 43% et un diamètre moyen de distribution de pores de l'ordre de 25 micromètres, tel que mesuré par porosimétrie mercure.

## Exemple 1 (comparatif):

Selon cet exemple, une couche séparatrice membranaire en carbure de silicium est ensuite déposée sur la paroi interne des canaux d'une structure support telle qu'obtenue précédemment, selon le procédé décrit ci-après:

Un primaire d'accrochage de la couche séparatrice est constitué dans un premier temps, à partir d'une barbotine dont la formulation minérale comporte 30% en masse d'une poudre de grains de SiC noir (SIKA DPF-C) dont le diamètre médian D50 est d'environ 11 micromètres, 20% en masse d'une poudre de grains de SiC noir (SIKA FCP-07) dont le diamètre médian D50 est d'environ 2,5 micromètres, et 50% d'eau désionisée.

Une barbotine du matériau constituant la couche de filtration membranaire est également préparée, dont la formulation comporte 40% en masse de grains de SiC ($d_{50}$ autour de 0,6 micromètre) et 60% d'eau déminéralisée.

La rhéologie des barbotines a été réglée par ajout des additifs organiques à 0,5-0,7 Pa.s sous un gradient de cisaillement de $1s^{-1}$, mesurée à 22°C selon la norme DINC33-53019.

Ces deux couches sont déposées successivement selon le même procédé décrit ci-après : la barbotine est introduite dans un réservoir sous agitation (20 tour/min). Après une phase de désaérage sous vide léger (typiquement 25 millibars) tout en conservant l'agitation, le réservoir est mis en surpression d'environ 0,7 bar afin de pouvoir enduire l'intérieur du support à partir de sa partie basse jusqu'à son extrémité supérieure. Cette opération ne prend que quelques secondes pour un support de 30 cm de longueur. Immédiatement après enduction de la barbotine sur la paroi interne des canaux du support, l'excès est évacué par gravité.

Les supports sont ensuite séchés à température ambiante pendant 10 minutes puis à 60°C pendant 12h. Les supports ainsi séchés sont ensuite cuits sous Argon à une température de 1600°C pendant 2h à la pression ambiante.

Une coupe transversale est réalisée sur les filtres ainsi obtenus. La structure de la membrane est observée et étudiée au microscope électronique à balayage.

Exemple 2 (comparatif):

Selon cet exemple, on procède de façon identique à l'exemple 1 mais le filtre est finalement cuit sous Argon à une température de 1800°C, pendant 2h et à la pression ambiante.

**Exemple 3 (selon l'invention):**

Selon cet exemple, on procède de façon identique à l'exemple 1 mais le filtre est finalement cuit sous azote ($N_2$) à une température de 1800°C, pendant 2h et à la pression ambiante.

**Exemple 4 (selon l'invention):**

Selon cet exemple, on procède de façon identique à l'exemple 1 mais le filtre est finalement cuit sous azote ($N_2$) à une température de 1600°C, pendant 2h et à la pression ambiante.

**Exemple 5 (selon l'invention):**

Selon cet exemple, on procède de façon identique à l'exemple 1 mais le filtre est ensuite soumis à un traitement thermique supplémentaire consistant à une cuisson à 1200°C pendant deux heures sous une atmosphère 5%$H_2$/95%$N_2$ en volume.

**Exemple 6 (comparatif):**

Selon cet exemple, on procède de façon identique à l'exemple 2 précédent mais la cuisson finale des supports revêtus est opérée cette fois à la température de 1100°C pendant 2 heures et sous azote pur. Cet exemple apparaît donc conforme à l'enseignement des demandes EP0219383 ou encore EP2484433, pour la réalisation d'un filtre à membrane en SiC.

Les propriétés et les caractéristiques des filtres ainsi obtenus sont mesurées comme suit :
Sur la base des clichés de microscopie électronique, on mesure par analyse d'image l'épaisseur moyenne des couches successives obtenues pour chaque exemple.

L'épaisseur moyenne de la couche séparatrice est de l'ordre de 45 micromètres pour tous les exemples. Le diamètre médian de pores de la couche séparatrice membranaire varie entre 250 et 1100 nm selon les exemples.

Les autres résultats tels que mesurés comme indiqué précédemment sont reportés dans le tableau 1 qui suit.

On donne additionnellement ci-après les détails des autres protocoles expérimentaux suivis :

a) Une mesure de flux (débit d'eau relatif) est réalisée sur les filtres selon la méthode suivante :
A une température de 25°C un fluide constitué d'eau déminéralisée chargée à $5.10^{-3}$ mol/l de KCl alimente les filtres à évaluer sous une pression transmembranaire de 0,5 bars et une vitesse de circulation dans les canaux de 2 m/s. Le perméat (l'eau) est récupéré à la périphérie du filtre. La mesure du débit caractéristique du filtre est exprimée en L/min par surface de filtration en $m^2$ après 20h de filtration. Dans le tableau les résultats de débit ont été exprimés par référence aux données enregistrées pour l'exemple 1 comparatif. Plus précisément, une valeur supérieure à 100% indique un débit augmenté par rapport à la référence (exemple 1) et donc une amélioration de la capacité de filtration.

b) La mesure de la profondeur de rayure de la couche séparatrice membranaire, facteur essentiel de longévité du filtre, aussi appelé « scratch test », est effectuée à l'aide d'une pointe sphérico conique en diamant Rockwell C formant un angle conique de 120°, le rayon de courbure de la pointe étant de 200 microns. La pointe est conduite à vitesse constante de 12mm/min selon une charge incrémentale de 1N par pas de 1 mm sur une longueur de mesure de 6mm. Plusieurs passages peuvent être effectués. La dégradation du revêtement est une combinaison des contraintes d'indentation élastique et/ou plastique, des contraintes de frottement ainsi que des contraintes résiduelles internes au sein de la couche de matériau du revêtement. Il est mesuré la profondeur de pénétration de l'indenteur après un sixième passage au pas de 4N. Le taux de profondeur de rayure a été mesuré en pourcentage par rapport à la référence (exemple 1) fixée à 100. Le taux de résistance des exemples 2 à 5 est calculé en faisant le rapport de profondeur de l'indenteur de l'exemple divisé par la profondeur de l'indenteur mesurée sur l'exemple 1. Un taux inférieur à 100% représentant une résistance à la rayure supérieure à la référence.

Les caractéristiques et les propriétés des filtres et de la couche séparatrice membranaire (désignée dans le tableau ci-dessous par membrane) obtenus selon les exemples 1 à 6 sont données dans le tableau 1 ci-après :

Tableau 1

| | Exemple 1 (comp.) | Exemple 2 (comp.) | Exemple 3 (inv.) | Exemple 4 (inv.) | Exemple 5 (inv.) | Exemple 6 (comp.) |
|---|---|---|---|---|---|---|
| Teneur massique en SiC de la membrane (%) | >99,0 | >99,0 | >99,5 | 99,3 | 99,3 | >98,5 |
| Teneur massique en azote élémentaire de la membrane (%) | <0,05 | <0,05 | 0,11 | 0,36 | 0,42 | <0,05 |
| Teneur massique en oxygène élémentaire de la membrane (%) | 0,5 | 0,5 | 0,15 | 0,25 | 0,16 | >0,5 |
| Cuisson de la membrane | 1600°C/2h Ar | 1800°C/2h Ar | 1800°C/ 2h $N_2$ | 1600°C/ 2h $N_2$ | 1600°C/Ar 1200°C/2h/ $H_2$-$N_2$ | 1100°C/2h/ $N_2$ |
| Epaisseur moyenne de la membrane séparatrice (micromètres) | 45 | 45 | 45 | 45 | 45 | 45 |
| Diamètre médian de pores de la membrane séparatrice (nm) | 600 | 1100 | 650 | 250 | 600 | 200 |
| Taux de rayure de la membrane | 100 | 63 | 65 | 85 | 90 | >>150 |
| Mesure de débit relative à l'eau déminéralisée KCl | 100 | 150 | 140 | 80 | 135 | non mesuré |

Les résultats regroupés dans le tableau 1 qui précèdent indiquent que les exemples 3 et 4 selon l'invention présentent les meilleures performances combinées aux différents tests et mesures pratiquées. En particulier les filtres dotés d'une membrane filtrante selon l'invention présentent une résistance mécanique très élevée (scratch test) vis-à-vis de la référence (exemple 1).

Si on se réfère à l'exemple 3 selon l'invention comparé à l'exemple 1 de référence, le filtre selon l'invention présente une capacité de filtration très supérieure, les tailles des pores étant sensiblement identiques pour les deux échantillons. De telles mesures indiquent une augmentation sensible des performances de filtration, tout en conservant la même sélectivité.

Si on se réfère à l'exemple 4 selon l'invention comparé à l'exemple 1 de référence, on remarque qu'il devient possible par application de la présente invention de proposer des filtres très sélectifs, c'est-à-dire présentant une taille de pores très fine, tout en maintenant une capacité de filtration acceptable.

Les exemples 3 et 4 se caractérisent également par la résistance mécanique élevée de la couche membranaire filtrante obtenue selon l'invention, une telle amélioration conduisant logiquement à une durée de vie attendue du filtre largement supérieure sans détérioration sensible des performances de filtration (débit, sélectivité, etc.)

L'exemple 5 selon l'invention montre que le mode alternatif d'obtention de la couche membranaire décrite précédemment conduit aux mêmes améliorations, notamment en termes de flux de perméat en sortie du filtre.

L'exemple 6 comparatif (pour lequel la température de calcination sous azote est seulement de 1100°C) présente un taux de rayure très important, c'est-à-dire une résistance mécanique faible. Les données reportées dans le tableau 2 montrent ainsi qu'une telle température, trop faible, ne permet pas l'insertion d'azote élémentaire dans le matériau constituant la membrane.

Au final, les résultats regroupés dans le tableau indiquent que le matériau utilisé selon l'invention pour fabriquer la couche séparatrice membranaire ne peut être obtenu que suivant certaines conditions de procédé, non encore décrites dans l'art antérieur.

## Revendications

1. Filtre pour la filtration d'un liquide, comprenant ou constitué par un élément support (1) fait dans un matériau céramique poreux, ledit élément présentant une forme tubulaire ou parallélépipédique délimitée par une surface externe (2) et comprenant dans sa portion interne (3) un ensemble de canaux (4) adjacents, d'axes parallèles entre eux et séparés les uns des autres par des parois (8) dudit matériau inorganique poreux, dans lequel :

   - au moins une partie desdits canaux (4) sont recouverts sur leur surface interne d'une couche séparatrice membranaire (5) poreuse et/ou
   - au moins une partie de ladite surface externe (2) est recouverte d'une couche séparatrice membranaire (5) poreuse;

   ledit filtre étant **caractérisé en ce que** :

   - ladite couche séparatrice membranaire est faite dans un matériau constitué essentiellement de carbure de silicium (SiC),
   - de l'azote élémentaire est présent aux joints de grains et dans les grains de SiC constituant la couche séparatrice membranaire poreuse, la teneur massique en azote élémentaire de la couche séparatrice membranaire poreuse, déterminée par fusion sous gaz inerte, étant comprise entre 0,1% et 2%,
   - le diamètre médian de pores de la couche séparatrice membranaire, déterminé par analyse d'image prise au microscope électronique à balayage, est compris entre 10 nanomètres et 5 micromètres.
   - la porosité de la couche séparatrice membranaire, déterminée par analyse d'image prise au microscope électronique à balayage, est comprise entre 30 et 70%,
   - la taille médiane des grains de SiC dans ledit matériau, déterminée par analyse d'image prise au microscope électronique à balayage, est comprise entre 20 nanomètres et 10 micromètres.

2. Filtre selon la revendication précédente, dans lequel la teneur massique en azote élémentaire de la couche constituant la couche séparatrice membranaire poreuse est comprise entre 0,1% et 1,5%.

3. Filtre selon l'une des revendications précédentes, dans laquelle l'épaisseur de la couche séparatrice membranaire est comprise entre 10 et 60 micromètres.

4. Filtre selon l'une des revendications précédentes, dans laquelle la teneur massique en oxygène élémentaire du matériau constituant la couche séparatrice membranaire est inférieure ou égale à 1% et de préférence est inférieure à 0,5%.

5. Filtre selon l'une des revendications précédentes dans lequel l'élément support poreux comprend ou est constitué par un matériau choisi parmi le carbure de silicium, SiC, en particulier le SiC fritté en phase liquide ou en phase solide, le SiC recristallisé, le nitrure de Silicium, en particulier $Si_3N_4$, l'oxynitrure de Silicium, en particulier $Si_2ON_2$, l'oxynitrure de Silicium et d'Aluminium, ou une combinaison de ceux-ci.

6. Filtre selon l'une des revendications précédentes dans lequel la porosité ouverte du matériau constituant l'élément support est comprise entre 20 et 60%, le diamètre médian de pores du matériau constituant l'élément support poreux étant de préférence compris entre 5 et 50 micromètres.

**7.** Filtre selon l'une des revendications précédentes comprenant en outre une ou plusieurs couches primaires disposées entre le matériau constituant l'élément support et le matériau constituant la couche séparatrice membranaire.

**8.** Filtre selon l'une des revendications précédentes, dans lequel le SiC représente plus de 95% de la masse du matériau constituant la couche séparatrice membranaire.

**9.** Procédé de fabrication d'une couche séparatrice membranaire selon la revendication précédente, dans un filtre tangentiel ou frontal selon l'une des revendications 1 à 8, comprenant les étapes suivantes :

- préparation d'une barbotine à partir d'une poudre de particules de carbure de silicium de taille moyenne comprise entre 20 nanomètres et 10 micromètres,
- application de ladite barbotine sur l'élément support, dans des conditions permettant la formation d'une couche mince de la barbotine sur la partie interne des canaux dudit filtre,
- séchage puis cuisson sous une atmosphère contenant de azote à une température comprise entre 1400°C et 2000°C et pendant un temps suffisant pour l'obtention d'une couche séparatrice membranaire sur leur surface interne desdits canaux, ladite couche étant constituée essentiellement carbure de silicium contenant de l'azote, la teneur massique en azote élémentaire dans ladite couche étant comprise entre 0,1% et 2%.

**10.** Utilisation d'un filtre selon l'une des revendications 1 à 8 pour la filtration de liquides, en particulier d'un liquide aqueux.

**Patentansprüche**

**1.** Filter für die Filtration einer Flüssigkeit, umfassend ein Trägerelement (1) oder aus diesem bestehend, das aus einem porösen Keramikmaterial gefertigt ist, wobei das Element eine röhrenförmige oder quaderförmige Form aufweist, die durch eine äußere Oberfläche (2) begrenzt ist, und umfassend in seinem inneren Abschnitt (3) eine Anordnung von angrenzenden Kanälen (4) mit zueinander parallelen Achsen und die durch die Wände (8) des anorganischen porösen Materials voneinander getrennt sind, wobei:

- mindestens ein Teil der Kanäle (4) auf ihren inneren Oberflächen von einer porösen membranartigen Trennschicht (5) bedeckt wird und/oder
- mindestens ein Teil der äußeren Oberfläche (2) von einer porösen membranartigen Trennschicht (5) bedeckt wird;
der Filter **dadurch gekennzeichnet ist, dass:**

- die membranartige Trennschicht aus einem Material gefertigt ist, das im Wesentlichen aus Siliciumcarbid (SiC) besteht,
- elementarer Stickstoff an Korngrenzen und in den SiC-Körnern vorhanden ist, aus denen die poröse membranartige Trennschicht besteht, wobei der Massengehalt an elementarem Stickstoff der porösen membranartigen Trennschicht, der durch eine Schmelzung unter Schutzgas bestimmt wird, zwischen 0,1 % und 2 % umfasst,
- der mittlere Durchmesser von Poren der membranartigen Trennschicht, der durch eine Analyse von einem mit einem Rasterelektronenmikroskop aufgenommenen Bild bestimmt wird, zwischen 10 Nanometern und 5 Mikrometern umfasst.
- die Porosität der membranartigen Trennschicht, die durch die Analyse von dem mit dem Rasterelektronenmikroskop aufgenommenen Bild bestimmt wird, zwischen 30 und 70 % umfasst,
- die mittlere Größe von SiC-Körnern in dem Material, die durch die Analyse von dem mit dem Rasterelektronenmikroskop aufgenommenen Bild bestimmt wird, zwischen 20 Nanometer und 10 Mikrometer umfasst.

**2.** Filter nach dem vorstehenden Anspruch, wobei der Massengehalt an elementarem Stickstoff der Schicht, aus der die poröse membranartige Trennschicht besteht, zwischen 0,1 % und 1,5 % umfasst.

**3.** Filter nach einem der vorstehenden Ansprüche, wobei die Dicke der membranartigen Trennschicht zwischen 10 und 60 Mikrometer umfasst.

**4.** Filter nach einem der vorstehenden Ansprüche, wobei der Massengehalt an elementarem Sauerstoff des Materials, aus dem die membranartige Trennschicht besteht, kleiner oder gleich 1 % ist und vorzugsweise kleiner als 0,5 % ist.

**5.** Filter nach einem der vorstehenden Ansprüche, wobei das poröse Trägerelement ein Material umfasst oder aus diesem besteht, das aus Siliciumcarbid, SiC, insbesondere dem gesinterten SiC in flüssiger Phase oder in fester Phase, dem umkristallisierten SiC, dem Siliciumnitrid, insbesondere $Si_3N_4$, dem Siliciumoxynitrid, insbesondere $Si_2ON_2$, dem Aluminium- und Siliciumoxynitrid oder einer Kombination aus diesen ausgewählt ist.

**6.** Filter nach einem der vorstehenden Ansprüche, wobei die offene Porosität des Materials, aus dem das Trägerelement besteht, zwischen 20 und 60 % umfasst, der mittlere Durchmesser der Poren des Materials, aus dem das poröse Trägerelement besteht, vorzugsweise zwischen 5 und 50 Mikrometer umfasst.

**7.** Filter nach einem der vorstehenden Ansprüche, ferner umfassend eine oder mehrere primäre Schichten, die zwischen dem Material, aus dem das Trägerelement besteht, und dem Material, aus dem die membranartige Trennschicht besteht, eingerichtet sind.

**8.** Filter nach einem der vorstehenden Ansprüche, wobei das SiC mehr als 95 % der Masse des Materials darstellt, aus dem die membranartige Trennschicht besteht.

**9.** Verfahren zum Herstellen einer membranartigen Trennschicht nach dem vorstehenden Anspruch, in einem Querstrom- oder einem Frontalfilter nach einem der Ansprüche 1 bis 8, umfassend die folgenden Schritte:

- Erzeugen einer Tonschlämme aus einem Puder von Siliciumcarbidpartikeln, deren Durchschnittsgröße zwischen 20 Nanometer und 10 Mikrometer umfasst,
- Aufbringen der Tonschlämme auf das Trägerelement, bei Bedingungen, die die Ausbildung einer dünnen Schicht der Tonschlämme auf den inneren Teil der Kanäle des Filters ermöglichen,
- Trocknen, dann Brennen, unter einer Atmosphäre, die Stickstoff enthält, bei einer Temperatur, die zwischen 1400 °C und 2000 °C umfasst, und während einer Zeit, die zum Erhalten einer membranartigen Trennschicht auf der inneren Oberfläche der Kanäle ausreicht, wobei die Schicht aus im Wesentlichen Siliciumcarbid besteht, das Stickstoff enthält, wobei der Massengehalt von elementarem Stickstoff in der Schicht zwischen 0,1 % und 2 % umfasst.

**10.** Verwendung eines Filters nach einem der Ansprüche 1 bis 8 für die Filtration von Flüssigkeiten, insbesondere einer wässrigen Flüssigkeit.


**Claims**

**1.** A filter for the filtration of a fluid, such as a liquid, comprising or composed of a support element (1) made of a porous ceramic material, said element exhibiting a tubular or parallelepipedal shape delimited by an external surface (2) and comprising, in its internal portion (3), a set of adjacent channels (4) with axes parallel to one another and separated from one another by walls (8) of said porous inorganic material, in which:

- at least a portion of said channels (4) are covered on their internal surface with a porous separating membrane layer (5) and/or
- at least a portion of said external surface (2) is covered with a porous separating membrane layer (5); said filter being **characterized in that**:

- said separating membrane layer is made of a material essentially composed of silicon carbide (SiC),
- elemental nitrogen is present at the grain boundaries and in the SiC grains constituting the separating membrane layer, the content by weight of elemental nitrogen of the porous separating membrane layer, determined after melting under an inert gas, being between 0.1% and 2%,
- the median pore diameter of the separating membrane layer, measured by analysis of photographs obtained by scanning electron microscopy, is between 10 nanometers and 5 micrometers,
- the porosity of the separating membrane layer, measured by analysis of photographs obtained by scanning electron microscopy, is between 30 and 70%,
- the median size of the SiC grains in said material, measured by analysis of photographs obtained by scanning electron microscopy, is between 20 nanometers and 10 micrometers.

**2.** The filter as claimed in the preceding claim, in which the content by weight of elemental nitrogen of the porous separating membrane layer is between 0.1% and 1.5%.

3. The filter as claimed in one of the preceding claims, in which the thickness of the separating membrane layer obtained is between 10 and 60 micrometers.

4. The filter as claimed in one of the preceding claims, in which the content by weight of elemental oxygen of the material constituting the separating membrane layer is less than or equal to 1% and preferably is less than 0.5%.

5. The filter as claimed in one of the preceding claims, in which the porous support element comprises or is composed of a material chosen from silicon carbide, SiC, in particular liquid-phase or solid-phase sintered SiC, recrystallized SiC, silicon nitride, in particular $Si_3N_4$, silicon oxynitride, in particular $Si_2ON_2$, silicon aluminum oxynitride or a combination of these.

6. The filter as claimed in one of the preceding claims, in which the open porosity of the material constituting the support element is between 20 and 60%, the median pore diameter of the material constituting the porous support element preferably being between 5 and 50 micrometers.

7. The filter as claimed in one of the preceding claims, additionally comprising one or more primer layers arranged between the material constituting the support element and the material constituting the separating membrane layer.

8. The filter as claimed in one of the preceding claims, in which the SiC represents more than 95% of the weight of the material constituting the separating membrane layer.

9. A process for the manufacture of a separating membrane layer as claimed in the preceding claim, in a tangential or frontal filter as claimed in one of claims 1 to 8, comprising the following stages:

   - preparation of a slip from a powder of silicon carbide particles having a median size of between 20 nanometers and 10 micrometers,
   - application of said slip to the support element under conditions which make possible the formation of a thin layer of the slip on the internal part of the channels of said filter,
   - drying and then firing under an atmosphere containing nitrogen at a temperature of between 1400°C and 2000°C and for a time sufficient to obtain a separating membrane layer on their internal surface of said channels, said layer being essentially composed of silicon carbide containing nitrogen, the content by weight of elemental nitrogen in said layer being between 0.1% and 2%.

10. The use of a filter as claimed in one of claims 1 to 11 for the filtration of liquids, in particular of an aqueous liquid.

FIG. 1

FIG. 2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2549736
- EP 0219383 A1
- WO 03024892 A
- US 7699903 B2
- EP 2511250 A
- EP 2484433 A
- US 3875477 A
- EP 0219383 A